(19) Europäisches Patentamt
European Patent Office
Office européen des brevets

(11) EP 3 998 299 A1

# (12) EUROPEAN PATENT APPLICATION
published in accordance with Art. 153(4) EPC

(43) Date of publication:
**18.05.2022 Bulletin 2022/20**

(21) Application number: **20841045.6**

(22) Date of filing: **09.07.2020**

(51) International Patent Classification (IPC):
***C08G 59/62*** *(2006.01)* ***C08G 18/10*** *(2006.01)*
***C08G 18/32*** *(2006.01)* ***C08L 63/00*** *(2006.01)*

(52) Cooperative Patent Classification (CPC):
**C08G 18/10; C08G 18/32; C08G 59/62; C08L 63/00**

(86) International application number:
**PCT/KR2020/008999**

(87) International publication number:
**WO 2021/010654 (21.01.2021 Gazette 2021/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.07.2019 KR 20190084193**
**12.07.2019 KR 20190084502**

(71) Applicant: **Samyang Corporation**
**Jongno-gu**
**Seoul 03129 (KR)**

(72) Inventors:
- **LEE, Jae Hoon**
  **Daejeon 34049 (KR)**
- **SONG, Gwang Seok**
  **Jeonju-si Jeollabuk-do 55021 (KR)**
- **NOH, Jae Guk**
  **Daejeon 34185 (KR)**
- **RYU, Hoon**
  **Daejeon 35235 (KR)**

(74) Representative: **Wohlfahrt, Jan Günther et al**
**Gleiss Große Schrell und Partner mbB**
**Patentanwälte Rechtsanwälte**
**Leitzstraße 45**
**70469 Stuttgart (DE)**

## (54) ANHYDROUS ALCOHOL-ALKYLENE GLYCOL COMPOSITION, ANHYDROUS ALCOHOL-BASED URETHANE-MODIFIED POLYOL COMPOSITION, AND USES OF SAME FOR EXPOXY RESIN COMPOSITION

(57) The present invention relates to an anhydrous alcohol-alkylene glycol composition, an anhydrous alcohol-based urethane-modified polyol composition, and uses of same for an epoxy resin composition.

EP 3 998 299 A1

## Description

## TECHNICAL FIELD

The present invention relates to an anhydrodugar alcohol-alkylene glycol composition, an anhydrodugar alcohol-based urethane-modified polyol composition, and use thereof for epoxy resin composition, and more specifically, an anhydrodugar alcohol-alkylene glycol composition which comprises monoanhydrosugar alcohol-alkylene glycol, dianhydrosugar alcohol-alkylene glycol, and alkylene oxide adduct of polymer of one or more of monoanhydrosugar alcohol and dianhydrosugar alcohol, and has properties such as number average molecular weight (Mn), poly dispersity index (PDI) and hydroxyl value of composition satisfying specific levels, a urethane-modified polyol composition prepared by urethane crosslinking reaction of the anhydrodugar alcohol-alkylene glycol composition and polyisocyanate, and use thereof for epoxy resin composition (for example, curing agent or toughening agent for epoxy resin).

## BACKGROUND ART

Epoxy resins have good heat resistance, mechanical properties, electric properties and adhesive property. By utilizing such properties, epoxy resins are used in encapsulation materials for wiring boards, circuit boards or circuit substrates having multilayers thereof, semiconductor chips, coils, electric circuits, etc. Or, epoxy resins are used as resins for adhesives, paints, fiber-reinforced materials, etc.

Extensive uses of epoxy resins as thermosetting resin can be found in many applications. They are used as thermosetting matrix in prepreg consisting of thermosetting matrix and fiber contained therein. In addition, because of toughness, flexibility, adhesion and chemical resistance thereof, they can be used as materials for surface coating, adhesion, molding and lamination. As such, various applications of epoxy resins can be found in various industries such as aerospace, automotive, electronics, construction, furniture, green energy and sporting goods industries.

Epoxy resins can be used easily and widely, and also can be used according to their reactivity necessary for particular application. For instance, epoxy resins can be solid, liquid or semi-solid, and can have various reactivity according to the use for which they are to be applied. Reactivity of epoxy resin is measured frequently in view of epoxy equivalent weight which is the molecular weight of the resin containing single reactive epoxy group. As the epoxy equivalent weight of epoxy resin becomes lower, the reactivity becomes higher. Various reactivity is necessary for various use of epoxy resin, but it becomes different according to whether or not epoxy resin exists as matrix of fiber-reinforced prepreg, adhesion coating, structural adhesive.

Epoxy resin must have epoxy bond as chemical units of molecules constituting it. The representative is that prepared by polymerizing epichlorohydrin and bisphenol A. Epoxy resin is used not alone but together with a curing agent added to change it to a thermoset material, and thus it is appropriate to think it usually as an intermediate of resin. That is, a cured product cannot be obtained by using epoxy resin alone, and it can be obtained only by forming crosslinking points which are bonded to epoxy reactive group and become immovable. A material that forms such crosslinking points is referred to as a curing agent.

As a curing agent for epoxy resin, a coated type or capsule type latent curing agent (hardener) has been used largely and conventionally (for example, a film-coated latent hardener disclosed in Korean Laid-open Patent Publication No. 10-2007-0104621, an encapsulated latent hardener having core-shell structure disclosed in Korean Laid-open Patent Publication No. 10-2012-0046158, etc.). However, in such a coated type or capsule type latent curing agent, the protective coating film or shell should be broken or have permeability in order to release the core material (curing ingredient) into the environment or matrix for adhesion, and thus there is a problem of decrease in curing rate and increase in curing temperature.

In particular, phenol curing agent used largely and conventionally has shown an environmental problem due to the residual phenol present in phenol resin. That is, although the residual phenol disappears after the curing, it threatens the health of workers during its handling, causing a problem in use.

In addition, since epoxy resin itself is very brittle, the range of its application is limited more or less. Accordingly, in order to improve toughness of epoxy resin to breakage, rubber ingredients (e.g.: carboxyl-terminated poly(butadiene co-acrylonitrile) (CTBN), amine-terminated poly(butadiene co-acrylonitrile) (ATBN)), inorganic hard particles (e.g.: aluminum trihydrate, glass bead), and high performance thermoplastic polymers (e.g.: polyethersulfone (PES), polyetherimide (PEI), polyetherketone (PEK), polyphenylene oxide (PPO)), etc. have been researched as additive to be incorporated into epoxy resin.

For example, various rubber-modified epoxy, polyester polyols or polyurethanes have been used as additive for improving toughness of epoxy resin (for instance, Journal of Adhesion and Interface, 2015, 16(3), 101-107). However, although rubber additive improves toughness of epoxy resin, it has a low glass transition temperature, and thereby use of epoxy resin at high temperature is limited, and lowering of mechanical properties is caused. In addition, although high performance thermoplastic polymer additive improves thermal stability and mechanical properties of epoxy resin, the

toughness is not improved sufficiently as compared with rubber additive, and the high molecular weight makes its dissolution difficult and thus chemical bonding with epoxy resin cannot be formed, resulting in lowering of corrosion resistance and eco-friendliness.

Therefore, it is requested to develop a curing agent capable of maintaining the curing degree of epoxy resin in good level and a toughening agent capable of improving impact strength of epoxy resin, with good eco-friendliness and no harm to human body.

## CONTENTS OF THE INVENTION

## PROBLEMS TO BE SOLVED

The first purpose of the present invention is to provide an anhydrodugar alcohol-alkylene glycol composition which has good eco-friendliness and no harm to human body and, in particular, when used as a curing agent for epoxy resin, can improve flexibility of the cured product while maintaining the curing degree in good level, and a curing agent for epoxy resin comprising the same, and an epoxy resin composition comprising the curing agent.

The second purpose of the present invention is to provide an anhydrodugar alcohol-based urethane-modified polyol composition which has good eco-friendliness and no harm to human body and, in particular, when used as a toughening agent for epoxy resin, can improve impact strength of epoxy resin, and a toughening agent for epoxy resin comprising the same, and an epoxy resin composition comprising the toughening agent.

## TECHNICAL MEANS

The first aspect of the present invention provides an anhydrodugar alcohol-alkylene glycol composition comprising: (i) monoanhydrosugar alcohol-alkylene glycol; (ii) dianhydrosugar alcohol-alkylene glycol; and (iii) alkylene oxide adduct of polymer of one or more of monoanhydrosugar alcohol and dianhydrosugar alcohol, wherein (1) the number average molecular weight (Mn) of the composition is 280 to 1,000 g/mol; (2) the poly dispersity index (PDI) of the composition is 1.77 to 5.0; and (3) the hydroxyl value of the composition is 200 to 727 mgKOH/g.

The second aspect of the present invention provides a method for preparing an anhydrodugar alcohol-alkylene glycol composition, comprising a step of addition reaction of an anhydrodugar alcohol composition and alkylene oxide, wherein the anhydrodugar alcohol composition comprises i) monoanhydrosugar alcohol; ii) dianhydrosugar alcohol; and iii) polymer of one or more of monoanhydrosugar alcohol and dianhydrosugar alcohol; and wherein (1) the number average molecular weight (Mn) of the prepared anhydrodugar alcohol-alkylene glycol composition is 280 to 1,000 g/mol; (2) the poly dispersity index (PDI) of the prepared anhydrodugar alcohol-alkylene glycol composition is 1.77 to 5.0; and (3) the hydroxyl value of the prepared anhydrodugar alcohol-alkylene glycol composition is 200 to 727 mgKOH/g.

The third aspect of the present invention provides a curing agent for epoxy resin comprising the anhydrodugar alcohol-alkylene glycol composition of the present invention.

The fourth aspect of the present invention provides a urethane-modified polyol composition prepared by urethane crosslinking reaction of the anhydrodugar alcohol-alkylene glycol composition of the present invention and polyisocyanate, wherein the equivalent ratio of NCO group/OH group is greater than 0.1 and less than 1.7.

The fifth aspect of the present invention provides a method for preparing a urethane-modified polyol composition, comprising a step of urethane crosslinking reaction of the anhydrodugar alcohol-alkylene glycol composition of the present invention and polyisocyanate to prepare the urethane-modified polyol composition, wherein the anhydrodugar alcohol-alkylene glycol composition and the polyisocyanate are subjected to urethane crosslinking reaction so that the equivalent ratio of NCO group/OH group becomes greater than 0.1 and less than 1.7.

The sixth aspect of the present invention provides a toughening agent for epoxy resin comprising the urethane-modified polyol composition of the present invention.

The seventh aspect of the present invention provides an epoxy resin composition comprising: the curing agent for epoxy resin of the present invention, or the toughening agent for epoxy resin of the present invention, or combination thereof; and an epoxy resin.

The eighth aspect of the present invention provides a cured product obtained by curing the epoxy resin composition of the present invention.

The ninth aspect of the present invention provides a molded article comprising the cured product of the present invention.

## EFFECT OF THE INVENTION

The anhydrodugar alcohol-alkylene glycol composition according to the present invention has good eco-friendliness and no harm to human body and, in particular, when used as a curing agent for epoxy resin, it can improve flexibility

of the cured product while maintaining the curing degree in good level.

In addition, the anhydrodugar alcohol-based urethane-modified polyol composition according to the present invention has good eco-friendliness and no harm to human body and, in particular, when used as a toughening agent for epoxy resin, it can improve impact strength of epoxy resin.

## CONCRETE MODE FOR CARRYING OUT THE INVENTION

The present invention will be explained in detail below.

### [Anhydrodugar alcohol-alkylene glycol composition]

The anhydrodugar alcohol-alkylene glycol composition of the present invention comprises (i) monoanhydrosugar alcohol-alkylene glycol; (ii) dianhydrosugar alcohol-alkylene glycol; and (iii) alkylene oxide adduct of polymer of one or more of monoanhydrosugar alcohol and dianhydrosugar alcohol.

The number average molecular weight (Mn) of the anhydrodugar alcohol-alkylene glycol composition of the present invention is 280 to 1,000 g/mol. If the number average molecular weight of the anhydrodugar alcohol-alkylene glycol composition is less than 280 g/mol, a cured epoxy resin product prepared by using such an anhydrodugar alcohol-alkylene glycol composition as a curing agent for epoxy resin becomes to have very low elongation ratio and thus show poor flexibility, and such an anhydrodugar alcohol-alkylene glycol composition becomes less compatible with polyisocyanate and thus the reaction mixture is not be mixed well, and thereby a urethane-modified polyol composition cannot be prepared. To the contrary, if the number average molecular weight of the anhydrodugar alcohol-alkylene glycol composition is greater than 1,000 g/mol, even if such an anhydrodugar alcohol-alkylene glycol composition is used as a curing agent for epoxy resin or a urethane-modified polyol composition prepared therefrom is used as a toughening agent for epoxy resin, there is no effect of further improving the properties and just the economy becomes poorer according to the increase of raw material cost.

In an embodiment, the number average molecular weight (Mn: g/mol) of the anhydrodugar alcohol-alkylene glycol composition may be 280 or more, 290 or more, 300 or more, 310 or more, 315 or more, or 317 or more, and it may be 1,000 or less, 990 or less, 980 or less, 970 or less, 960 or less, 950 or less, 940 or less, 930 or less, 920 or less, 915 or less, or 912 or less.

In an embodiment, the number average molecular weight (Mn) of the anhydrodugar alcohol-alkylene glycol composition may be 290 to 990, concretely 300 to 970, more concretely 310 to 950, still more concretely 315 to 930, and still more concretely 317 to 912.

The poly dispersity index (PDI) of the anhydrodugar alcohol-alkylene glycol composition of the present invention is 1.77 to 5.0. If the poly dispersity index of the anhydrodugar alcohol-alkylene glycol composition is less than 1.77, a cured epoxy resin product prepared by using such an anhydrodugar alcohol-alkylene glycol composition as a curing agent for epoxy resin becomes to have very low elongation ratio and thus show poor flexibility, and such an anhydrodugar alcohol-alkylene glycol composition becomes less compatible with polyisocyanate and thus the reaction mixture is not be mixed well, and thereby a urethane-modified polyol composition cannot be prepared. To the contrary, if the poly dispersity index of the anhydrodugar alcohol-alkylene glycol composition is greater than 5.0, even if such an anhydrodugar alcohol-alkylene glycol composition is used as a curing agent for epoxy resin or a urethane-modified polyol composition prepared therefrom is used as a toughening agent for epoxy resin, there is no effect of further improving the properties and just the economy becomes poorer according to the increase of raw material cost.

In an embodiment, the poly dispersity index (PDI) of the anhydrodugar alcohol-alkylene glycol composition may be 1.77 or more, 1.78 or more, 1.79 or more, 1.8 or more, 1.85 or more, or 1.89 or more, and it may be 5 or less, 4.5 or less, 4 or less, 3.5 or less, 3 or less, 2.6 or less, 2.58 or less, 2.5 or less, 2.4 or less, or 2.35 or less.

In an embodiment, the poly dispersity index (PDI) of the anhydrodugar alcohol-alkylene glycol composition may be 1.78 to 4.5, concretely 1.79 to 4, more concretely 1.8 to 3.5, still more concretely 1.85 to 3, and still more concretely 1.89 to 2.58.

The hydroxyl value of the anhydrodugar alcohol-alkylene glycol composition of the present invention is 200 to 727 mgKOH/g. If the hydroxyl value of the anhydrodugar alcohol-alkylene glycol composition is less than 200 mgKOH/g, even if such an anhydrodugar alcohol-alkylene glycol composition is used as a curing agent for epoxy resin or a urethane-modified polyol composition prepared therefrom is used as a toughening agent for epoxy resin, there is no effect of further improving the properties and just the economy becomes poorer according to the increase of raw material cost. To the contrary, if the hydroxyl value of the anhydrodugar alcohol-alkylene glycol composition is greater than 727 mgKOH/g, a cured epoxy resin product prepared by using such an anhydrodugar alcohol-alkylene glycol composition as a curing agent for epoxy resin becomes to have very low elongation ratio and thus show poor flexibility, and such an anhydrodugar alcohol-alkylene glycol composition becomes less compatible with polyisocyanate and thus the reaction mixture is not be mixed well, and thereby a urethane-modified polyol composition cannot be prepared.

In an embodiment, the hydroxyl value (mgKOH/g) of the anhydrodugar alcohol-alkylene glycol composition may be 200 or more, 210 or more, 220 or more, 221 or more, 230 or more, 235 or more, or 237 or more, and it may be 727 or less, 725 or less, 720 or less, 715 or less, 710 or less, 705 or less, 700 or less, 690 or less, 680 or less, 670 or less, 660 or less, 650 or less, 640 or less, 630 or less, 620 or less, or 615 or less.

In an embodiment, the hydroxyl value of the anhydrodugar alcohol-alkylene glycol composition may be 210 to 720, concretely 220 to 700, more concretely 230 to 680, still more concretely 235 to 640, and still more concretely 237 to 615.

According to an embodiment of the present invention, the anhydrodugar alcohol-alkylene glycol composition satisfying the conditions of number average molecular weight (Mn), poly dispersity index (PDI) and hydroxyl value explained above can further satisfy the condition of hydroxyl equivalent weight of 78 to 280 g/eq. The hydroxyl equivalent weight is calculated according to the following equation:

$$\text{Hydroxyl equivalent weight (g/eq)} = 56{,}100 / \text{Hydroxyl value}$$

In an embodiment, the hydroxyl equivalent weight (g/eq) of the anhydrodugar alcohol-alkylene glycol composition may be 78 or more, 79 or more, 80 or more, 85 or more, 90 or more, or 91 or more, and it may be 280 or less, 270 or less, 260 or less, 255 or less, 250 or less, 240 or less, or 237 or less.

In an embodiment, the hydroxyl equivalent weight of the anhydrodugar alcohol-alkylene glycol composition may be 79 to 270, more concretely 80 to 260, still more concretely 85 to 255, still more concretely 90 to 250, and still more concretely 91 to 237.

In an embodiment, the anhydrodugar alcohol-alkylene glycol composition of the present invention is prepared from addition reaction of alkylene oxide and an anhydrodugar alcohol composition comprising i) monoanhydrosugar alcohol, ii) dianhydrosugar alcohol, and iii) polymer of one or more of monoanhydrosugar alcohol and dianhydrosugar alcohol.

Anhydrosugar alcohol can be prepared by dehydration reaction of hydrogenated sugar derived from natural product. Hydrogenated sugar (also referred to as "sugar alcohol") means a compound obtained by adding hydrogen to the reductive end group in sugar, and generally has a chemical formula of $HOCH_2(CHOH)_nCH_2OH$ wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

Among the monoanhydrosugar alcohol, dianhydrosugar alcohol, and polymer of one or more of monoanhydrosugar alcohol and dianhydrosugar alcohol (that is, polymer of monoanhydrosugar alcohol and/or dianhydrosugar alcohol) contained in the anhydrodugar alcohol composition, one or more, preferably two or more, and more preferably all of them can be obtained in a procedure for preparing anhydrosugar alcohol by dehydration reaction of hydrogenated sugar (for example, hexitol such as sorbitol, mannitol, iditol, etc.).

Monoanhydrosugar alcohol is an anhydrosugar alcohol formed by removing one molecule of water from inside of the hydrogenated sugar, and it has a tetraol form with four hydroxyl groups in the molecule.

In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environment-friendly material derived from recyclable natural resources, it has received much interest for a long time and researches on its production continue to proceed. Among such dianhydrosugar alcohols, isosorbide produced from sorbitol has the widest industrial applicability at present.

In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or a mixture of two or more of the foregoing.

In the present invention, the polymer of one or more of monoanhydrosugar alcohol and dianhydrosugar alcohol (that is, polymer of monoanhydrosugar alcohol and/or dianhydrosugar alcohol) may be a condensation polymer prepared from condensation reaction of monoanhydrosugar alcohol, condensation reaction of dianhydrosugar alcohol, or condensation reaction of monoanhydrosugar alcohol and dianhydrosugar alcohol. In the condensation reaction, the position and order of condensation between the monomers are not especially limited, and may be selected within the scope conventionally expectable by a skilled artisan without limitation.

In an embodiment of the present invention, for example, the polymer of one or more of monoanhydrosugar alcohol and dianhydrosugar alcohol may be one or more selected from the group consisting of polymers represented by the following formulas 1 to 5-which are, however, just examples of polymers prepared according to the position and

order of condensation between the monomers in condensation reaction-and thus the polymer is not limited thereto:

[Formula 1]

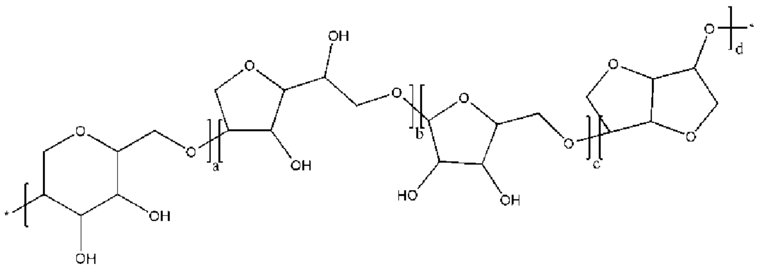

[Formula 2]

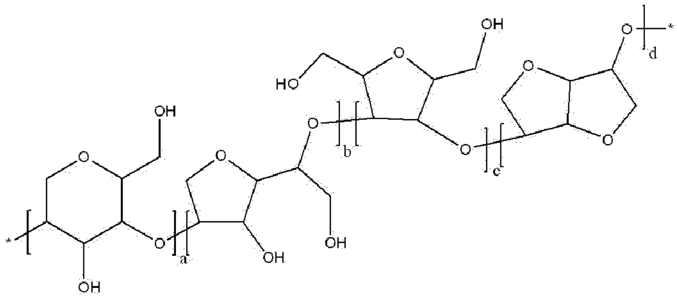

[Formula 3]

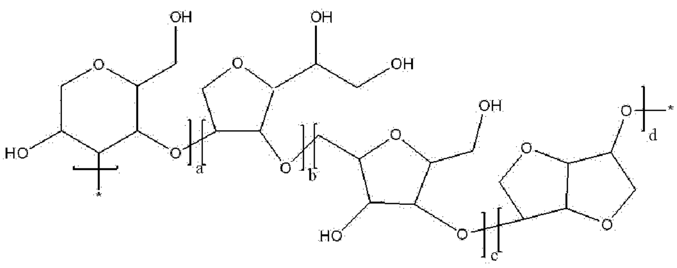

[Formula 4]

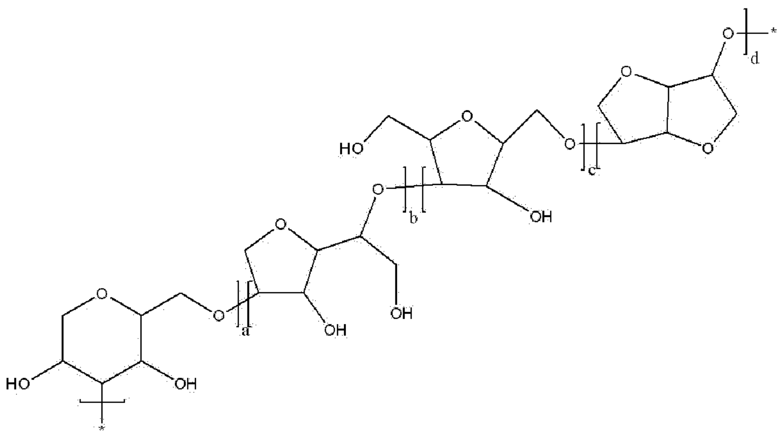

[Formula 5]

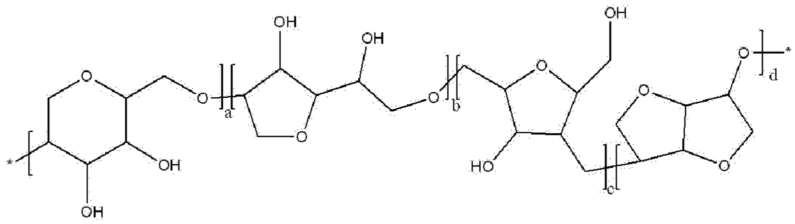

wherein: in formulas 1 to 5,
each of a to d is independently an integer of 0 to 25 (concretely an integer of 0 to 10, and more concretely an integer of 0 to 5), provided that a+b+c+d is 2 to 100 (concretely 2 to 50, and more concretely 2 to 20).

In an embodiment, the anhydrodugar alcohol composition may comprise, based on total weight of the composition, the monoanhydrosugar alcohol in an amount of 0.1 to 95 % by weight, more concretely 10 to 40 % by weight; the dianhydrosugar alcohol in an amount of 0.1 to 95 % by weight, more concretely greater than 5 % by weight and less than 95 % by weight, still more concretely 1 to 50 % by weight; and the polymer of one or more of monoanhydrosugar alcohol and dianhydrosugar alcohol in an amount of 5 to 99 % by weight, more concretely 30 to 90 % by weight.

In the present invention, the number average molecular weight (Mn: g/mol) of the anhydrodugar alcohol composition may be 160 or more, 165 or more, 170 or more, or 174 or more, and it may be 445 or less, 440 or less, 430 or less, 420 or less, 410 or less, 400 or less, or 395 or less.

In an embodiment, the number average molecular weight (Mn) of the anhydrodugar alcohol composition may be 160 to 445, concretely 165 to 440, more concretely 170 to 400, still more concretely 175 to 395, and still more concretely 175 to 393.

In an embodiment, the poly dispersity index (PDI) of the anhydrodugar alcohol composition may be 1.25 or more, 1.3 or more, or 1.33 or more, and it may be 3.15 or less, 3.1 or less, 3 or less, 2.9 or less, 2.8 or less, or 2.75 or less.

In an embodiment, the poly dispersity index (PDI) of the anhydrodugar alcohol composition may be 1.25 to 3.15, concretely 1.3 to 3.1, more concretely 1.3 to 3, still more concretely 1.33 to 2.8, and still more concretely 1.34 to 2.75.

In an embodiment, the hydroxyl value (mg KOH/g) of the anhydrodugar alcohol composition may be 645 or more, 650 or more, 655 or more, 659 or more, or 660 or more, and it may be 900 or less, 895 or less, 892 or less, or 891 or less.

In an embodiment, the hydroxyl value of the anhydrodugar alcohol composition may be 645 to 900, concretely 650 to 900, more concretely 655 to 895, still more concretely 660 to 892, and still more concretely 660 to 891.

According to a preferable embodiment, the anhydrodugar alcohol composition satisfies (i) the number average molecular weight (Mn) of 160 to 445 g/mol; (ii) the poly dispersity index (PDI) of 1.25 to 3.15; and (iii) the hydroxyl value of 645 to 900 mgKOH/g.

According to an embodiment of the present invention, the anhydrodugar alcohol composition satisfying the above conditions of number average molecular weight (Mn), poly dispersity index (PDI) and hydroxyl value, may further satisfy the condition that the average number of -OH groups per molecule in the composition is 2.6 to 5.

In such an embodiment, the average number of -OH groups per molecule in the anhydrodugar alcohol composition may be 2.6 or more, 2.7 or more, or 2.8 or more, and it may be 5 or less, 4.9 or less, 4.8 or less, 4.7 or less, or 4.6 or less.

More concretely, the average number of -OH groups per molecule in the anhydrodugar alcohol composition may be 2.7 to 4.9, still more concretely 2.7 to 4.7, and still more concretely 2.8 to 4.6.

In an embodiment, the anhydrodugar alcohol composition may be prepared by dehydration reaction of hydrogenated sugar with heating in the presence of acid catalyst and thin film distillation of the resulting product of the dehydration reaction. More concretely, the dehydration reaction may be conducted by heating hydrogenated sugar such as sorbitol, etc. in the presence of acid catalyst such as sulfuric acid, etc. under reduced pressure condition of, for example, 25 to 40 torr, to a temperature of 125 to 150°C, and the resulting product of such dehydration reaction, after neutralization with a base if necessary, may be subjected to thin film distillation by using a thin film distillator (SPD) at a temperature of 150 to 175°C under reduced pressure condition of, for example, 2 mbar or less, but it is not limited thereto.

In the present invention, the alkylene oxide may be a linear alkylene oxide having 2 to 8 carbons or a branched alkylene oxide having 3 to 8 carbons, and more concretely, it may be selected from ethylene oxide, propylene oxide or a combination thereof.

In the anhydrodugar alcohol-alkylene glycol composition of the present invention, 32 parts by weight or more of the alkylene oxide may be preferably added to 100 parts by weight of the anhydrodugar alcohol composition. If the addition amount of the alkylene oxide to 100 parts by weight of the anhydrodugar alcohol composition is less than 32

parts by weight, such an anhydrodugar alcohol-alkylene glycol composition may not be applied as a curing agent for epoxy resin since it may become less compatible with epoxy resin when used as a curing agent therefor, and in addition, a urethane-modified polyol composition may not be prepared therefrom since it may become less compatible with polyisocyanate (particularly, diisocyanate) compound.

Although there is no special limitation to the upper limit of the addition amount of the alkylene oxide to 100 parts by weight of the anhydrodugar alcohol composition, if the alkylene oxide is added too much (for example, greater than 500 parts by weight), the economy may become poorer according to the increase of raw material cost with no effect of further improving the properties.

In an embodiment, the addition amount of the alkylene oxide to 100 parts by weight of the anhydrodugar alcohol composition may be 32 parts by weight or more, 35 parts by weight or more, 40 parts by weight or more, 45 parts by weight or more, or 50 parts by weight or more, and it may be 500 parts by weight or less, 450 parts by weight or less, 400 parts by weight or less, 350 parts by weight or less, or 300 parts by weight or less.

In an embodiment, the addition amount of the alkylene oxide to 100 parts by weight of the anhydrodugar alcohol composition may be 32 to 500 parts by weight, more concretely 35 to 400 parts by weight, still more concretely 40 to 350 parts by weight, and still more concretely 50 to 300 parts by weight.

In an embodiment, the anhydrodugar alcohol-alkylene glycol composition of the present invention may be prepared by adding a catalyst (for example, potassium hydroxide (KOH)) to the anhydrodugar alcohol composition and heating the mixture (for example, up to 100 to 140°C), and adding alkylene oxide thereto and further heating the mixture (for example, up to 100 to 140°C) with agitation for reaction.

**[Urethane-modified polyol composition]**

The urethane-modified polyol composition of the present invention is prepared by urethane crosslinking reaction of the anhydrodugar alcohol-alkylene glycol composition of the present invention as explained above and polyisocyanate, wherein the equivalent ratio of NCO group/OH group is greater than 0.1 and less than 1.7.

In preparation of the urethane-modified polyol composition of the present invention, the polyisocyanate component used for urethane crosslinking reaction with the anhydrodugar alcohol-alkylene glycol composition may be diisocyanate compound, triisocyanate compound, tetraisocyanate compound, or a mixture thereof, and preferably diisocyanate compound may be used. The diisocyanate compound may be selected from the group consisting of methylenediphenyl diisocyanate (MDI), ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-diisocyanate, cyclohexane-1,4-diisocyanate, isophorone diisocyanate (IPDI), 2,4-hexahydrotoluene diisocyanate, 2,6-hexahydrotoluene diisocyanate, dicyclohexylmethane -4,4'-diisocyanate (HMDI), 1,3-phenylene diisocyanate, 1,4-phenylene diisocyanate, 2,4-toluene diisocyanate, 2,6-toluene diisocyanate, diphenylmethane-2,4'-diisocyanate, polydiphenylmethane diisocyanate (PMDI), naphthalene-1,5-diisocyanate, or combinations thereof.

In an embodiment, as the polyisocyanate, a toluene diisocyanate mixture of 2,4-toluene diisocyanate and 2,6-toluene diisocyanate (2,4-/2,6-isomer ratio = 80/20), methylenediphenyl diisocyanate (MDI), isophorone diisocyanate (IPDI) or a combination thereof may be used.

In the urethane-modified polyol composition of the present invention, the equivalent ratio of NCO group/OH group may be greater than 0.1, 0.15 or more, 0.2 or more, 0.3 or more, 0.4 or more, 0.5 or more, or 0.6 or more, and it may be less than 1.7, 1.65 or less, 1.6 or less, 1.5 or less, 1.4 or less, 1.2 or less, 1.0 or less, or 0.8 or less, and for example, it may be greater than 0.1 and less than 1.7, 0.15 to 1.65, 0.2 to 1.6, 0.3 to 1.5, 0.5 to 1.5, or 1.0 to 1.5. If the polyisocyanate is added in an amount to make the equivalent ratio of NCO group/OH group become 0.1 or less, when such a urethane-modified polyol composition is applied as a toughening agent for epoxy resin, the effect of improving the impact strength of epoxy resin is insufficient, and even if it is added in an amount to make the equivalent ratio of NCO group/OH group become 1.7 or more, when such a urethane-modified polyol composition is applied as a toughening agent for epoxy resin, the effect of improving the impact strength of epoxy resin is insufficient, too.

The method for preparing a urethane-modified polyol composition of the present invention comprises a step of urethane crosslinking reaction of the anhydrodugar alcohol-alkylene glycol composition of the present invention and polyisocyanate to prepare the urethane-modified polyol composition, wherein the anhydrodugar alcohol-alkylene glycol composition and the polyisocyanate are subjected to urethane crosslinking reaction so that the equivalent ratio of NCO group/OH group becomes greater than 0.1 and less than 1.7.

In the step of urethane crosslinking reaction in the method for preparing a urethane-modified polyol composition of the present invention, the equivalent ratio of NCO group/OH group may be greater than 0.1, 0.15 or more, 0.2 or more, 0.3 or more, 0.4 or more, 0.5 or more, or 0.6 or more, and it may be less than 1.7, 1.65 or less, 1.6 or less, 1.5 or less, 1.4 or less, 1.2 or less, 1.0 or less, or 0.8 or less, and for example, it may be greater than 0.1 and less than 1.7, 0.15 to 1.65, 0.2 to 1.6, 0.3 to 1.5, 0.5 to 1.5, or 1.0 to 1.5. If the polyisocyanate is added in an amount to make the equivalent ratio of NCO group/OH group become 0.1 or less, when such a urethane-modified polyol composition is

applied as a toughening agent for epoxy resin, the effect of improving the impact strength of epoxy resin is insufficient, and even if it is added in an amount to make the equivalent ratio of NCO group/OH group become 1.7 or more, when such a urethane-modified polyol composition is applied as a toughening agent for epoxy resin, the effect of improving the impact strength of epoxy resin is insufficient, too.

**[Curing agent for epoxy resin, toughening agent for epoxy resin, epoxy resin composition comprising the same and cured product thereof]**

The anhydrodugar alcohol-alkylene glycol composition of the present invention has good eco-friendliness and no harm to human body, and when used as a curing agent for epoxy resin, it can improve flexibility of the cured product while maintaining the curing degree in good level.

In addition, the urethane-modified polyol composition of the present invention has good eco-friendliness and no harm to human body, and when used as a toughening agent for epoxy resin, it can improve impact strength of epoxy resin.

Thus, other aspects of the present invention provide a curing agent for epoxy resin comprising the anhydrodugar alcohol-alkylene glycol composition of the present invention, and a toughening agent for epoxy resin comprising the urethane-modified polyol composition of the present invention.

Another aspect of the present invention provides an epoxy resin composition comprising: the curing agent for epoxy resin of the present invention, or the toughening agent for epoxy resin of the present invention, or combination thereof; and an epoxy resin.

In an embodiment, the curing agent for epoxy resin of the present invention may consist of the anhydrodugar alcohol-alkylene glycol composition of the present invention only.

In other embodiment, within the range wherein the purpose of the present invention can be achieved, the curing agent for epoxy resin of the present invention may further comprise additional curing agent other than the anhydrodugar alcohol-alkylene glycol composition of the present invention, and as such an additional curing agent, a curing agent useful for epoxy resin may be used.

In an embodiment, although it is not limited thereto, as such an additional curing agent, anhydrosugar alcohol (e.g., isosorbide), hydroxy-terminated prepolymer prepared by reacting anhydrosugar alcohol and polyisocyanate, or a mixture thereof may be used. More concretely, as the hydroxy-terminated prepolymer, a prepolymer wherein the reaction molar ratio of anhydrosugar alcohol and polyisocyanate is 1.15 moles to 2.45 moles of anhydrosugar alcohol to 1 mole of polyisocyanate may be used.

In an embodiment, the toughening agent for epoxy resin of the present invention may consist of the urethane-modified polyol composition of the present invention only.

In other embodiment, within the range wherein the purpose of the present invention can be achieved, the toughening agent for epoxy resin of the present invention may further comprise additional toughening agent other than the urethane-modified polyol composition of the present invention, and as such an additional toughening agent, a toughening agent useful for epoxy resin may be used.

In an embodiment, although it is not limited thereto, as such an additional toughening agent, carboxyl-terminated poly(butadiene co-acrylonitrile) (CTBN) modified epoxy, core-shell rubber modified epoxy, or a mixture thereof may be used.

For the epoxy resin composition of the present invention, a wide variety of epoxy resin may be used. The epoxy resin can be solid, liquid or semi-solid, and can have various reactivity according to the use for which it is to be applied. Reactivity of epoxy resin is measured frequently in view of epoxy equivalent weight which is the molecular weight of the resin containing single reactive epoxy group. As the epoxy equivalent weight of epoxy resin becomes lower, the reactivity becomes higher.

In an embodiment, the epoxy resin may be selected from the group consisting of bisphenol A-epichlorohydrin resin, diglycidyl ether resin of bisphenol A, novolac type epoxy resin, alicyclic epoxy resin, aliphatic epoxy resin, bicyclic epoxy resin, glycidyl ester type epoxy resin, brominated epoxy resin , bio-derived epoxy resin, epoxidized soybean oil, or combinations thereof, but it is not limited thereto.

In other embodiment, the epoxy resin may be selected from the group consisting of novolac type epoxy resin such as phenol novolac type epoxy resin, cresol novolac type epoxy resin, etc., bisphenol type epoxy resin such as bisphenol A type epoxy resin, bisphenol F type epoxy resin, etc., aromatic glycidylamine type epoxy resin such as N,N-diglycidylaniline, N,N-diglycidyltoluidine, diaminodiphenylmethane type glycidylamine, aminophenol type glycidylamine, etc., hydroquinone type epoxy resin, biphenyl type epoxy resin, stilbene type epoxy resin, triphenolmethane type epoxy resin, triphenol propane type epoxy resin, alkyl modified triphenolmethane type epoxy resin, triazine nucleus-containing epoxy resin, dicyclopentadiene modified phenol type epoxy resin, naphthol type epoxy resin, naphthalene-type epoxy resin, aralkyl-type epoxy resin such as phenol aralkyl-type epoxy resin having phenylene and/or biphenylene backbone, naphtholaralkyl-type epoxy resin having phenylene and/or biphenylene backbone, etc., vinylcyclohexene dioxide, dicyclopentadiene oxide, aliphatic epoxy resin such as alicyclic epoxy, etc. of alicyclicdiepoxy-adipate, etc., or combinations thereof, but it is not limited thereto.

In other embodiment, the epoxy resin may be selected from the group consisting of bisphenol F type epoxy resin, cresol novolac type epoxy resin, phenol novolac type epoxy resin, biphenyl type epoxy resin, stilbene type epoxy resin, hydroquinone type epoxy resin, naphthalene backbone type epoxy resin, tetraphenylolethane type epoxy resin, diphenyl phosphate (DPP) type epoxy resin, trishydroxyphenylmethane type epoxy resin, dicyclopentadienephenol type epoxy resin, diglycidyl ether of bisphenol A ethylene oxide adduct, diglycidyl ether of bisphenol A propylene oxide adduct, diglycidyl ether of bisphenol A, glycidyl ether having one epoxy group such as phenyl glycidyl ether, cresyl glycidyl ether, etc., nuclear hydrogenation epoxy resin which is a nuclear hydrogenation product of these epoxy resins, or combinations thereof, but it is not limited thereto.

In the epoxy resin composition of the present invention, the amount ratio of the epoxy resin and the curing agent for epoxy resin may be that makes the equivalent ratio of the curing agent to the epoxy resin (equivalent amount of the curing agent/equivalent amount of the epoxy resin) become, for example, in a range of 0.25 to 1.75, more concretely 0.75 to 1.25, and still more concretely 0.95 to 1.05. If the equivalent amount of the curing agent to the equivalent amount of the epoxy resin is too less, the mechanical strength is lowered and there may be a problem of lowering the properties in terms of thermal and adhesive strength. To the contrary, if the equivalent amount of the curing agent to the equivalent amount of the epoxy resin is too much, there may be a problem of lowering the mechanical strength and the properties in terms of thermal and adhesive strength, too.

Since the curing of epoxy resin at room temperature usually requires a temperature of 15°C or higher and the curing time of 24 hours or longer, rapid curing and curing at low temperature may be needed sometimes.

Accordingly, for the effect of promoting the curing, the epoxy resin composition of the present invention may further comprise a curing catalyst.

The curing catalyst useful in the present invention may be selected from the group consisting of, for example, amine compound (e.g., tertiary amine) such as benzyldimethylamine, tris(dimethylaminomethyl)phenol, dimethylcyclohexylamine, etc.; imidazole compound such as 1-cyanoethyl-2-ethyl-4-methylimidazole, 2-ethyl-4-methylimidazole, 1-benzyl-2-methylimidazole, etc.; urea-based or thiourea-based compound (e.g., butylated urea, butylated melamine, butylated thiourea, etc.); organophosphorus compound such as triphenyl phosphine, triphenyl phosphite, etc.; quaternary phosphonium salt such as tetraphenylphosphonium bromide, tetra-n-butylphosphonium bromide, etc.; diazabicycloalkene such as 1,8-diazabicyclo[5.4.0]undecene-7, etc. or organic acid salt, etc. thereof; organometallic compound such as zinc octylate, tin octylate, aluminum acetylacetone complex, etc.; quaternary ammonium salt such as tetraethylammonium bromide, tetrabutylammonium bromide, etc.; boron compound such as boron trifluoride, triphenylborate, etc.; metal halide such as zinc chloride, stannic chloride, etc.; latent curing catalyst (for example, high melting point dispersion type latent amine adduct obtained by adding dicyandiamide or amine to epoxy resin; microcapsule-type latent catalyst of imidazole-based, phosphorus-based, or phosphine-based accelerator coated with polymer on the surface; amine salt-type latent catalyst; high-temperature dissociation-type thermal cation polymerization-type latent catalyst such as Lewis acid salt and Bronsted acid salt, etc.) or combinations thereof, but it is not limited thereto.

In an embodiment, a curing catalyst selected from the group consisting of amine compound, imidazole compound, organophosphorus compound or combinations thereof may be used.

When the epoxy resin composition of the present invention comprises a curing catalyst, the amount thereof may be 0.01 part by weight to 1.0 part by weight, more concretely 0.05 part by weight to 0.5 part by weight, and still more concretely 0.08 part by weight to 0.2 part by weight, based on total 100 parts by weight of the epoxy resin and the curing agent for the epoxy resin, but it is not limited thereto. If the use amount of the curing catalyst is too small, the curing reaction of epoxy resin may not proceed sufficiently and thus there may be a problem of lowering the mechanical properties and thermal properties. To the contrary, if the use amount of the curing catalyst is too large, the curing reaction may proceed slowly even during the storage of the epoxy resin composition and thus there may be a problem of the viscosity increase.

If necessary, the epoxy resin composition of the present invention may further comprise one or more of additives conventionally used in epoxy resin compositions.

For example, such an additive may be selected from the group consisting of antioxidant, UV absorber, filler, resin modifier, silane coupling agent, diluent, colorant, defoamer, deaeration agent, dispersant, viscosity controlling agent, gloss controlling agent, wetting agent, conductivity imparting agent, or combinations thereof.

The antioxidant may be used to further improve the thermal stability of the obtained cured product, and for example, it may be selected from the group consisting of phenol-based antioxidant (dibutylhydroxytoluene, etc.), sulfur-based antioxidant (mercaptopropionic acid derivative, etc.), phosphorus-based antioxidant (9,10-dihydro-9-oxa-10-phosphaphenanthrene-10-oxide, etc.) or combinations thereof, but it is not especially limited thereto. The amount of antioxidant in the composition may be 0.01 to 10 parts by weight, or 0.05 to 5 parts by weight, or 0.1 to 3 parts by weight, based on total 100 parts by weight of the epoxy resin and the curing agent for the epoxy resin.

For example, the UV absorber may be selected from the group consisting of benzotriazole-based UV absorber

such as TINUBIN P or TINUVIN 234 (BASF Japan Ltd.); triazine-based UV absorber such as TINUVIN 1577ED; hindered amine-based UV absorber such as CHIMASSOLV 2020FDL, or combinations thereof, but it is not especially limited thereto. The amount of UV absorber in the composition may be 0.01 to 10 parts by weight, or 0.05 to 5 parts by weight, or 0.1 to 3 parts by weight, based on total 100 parts by weight of the epoxy resin and the curing agent for the epoxy resin.

The filler is formulated to the epoxy resin or the curing catalyst and used for the main purpose of improving the mechanical properties of the cured product, and in general, if its addition amount increases, the mechanical properties are improved. Inorganic fillers include extenders such as talc, sand, silica, calcium carbonate, etc.; reinforcing fillers such as mica, quartz, glass fiber, etc.; those of special use such as quartz powder, graphite, alumina, aerosil (for the purpose of imparting thixotropy), etc. Metallic fillers include those contributing to thermal expansion coefficient, attrition resistance, thermal conductivity, adhesion property such as aluminum, aluminum oxide, iron, iron oxide, copper, etc. or those imparting flame retardance such as antimony oxide ($Sb_2O_3$), etc., barium titanate. Organic fillers include lightweight filler such as plastic microsphere (phenolic resin, urea resin, etc.) or the like. In addition to the above, various kinds of glass fiber or chemical fiber cloth as reinforcing material may be treated as filler of broad meaning in preparation of laminated product. In order to provide a resin with thixotropy (referred to as a property that is in liquid phase in flowing state and in solid phase in stationary state so that the resin adhered vertically or by immersion method or impregnated into laminated material may not be spilt or lost during the curing), fine particles with large specific surface area may be used. For example, colloidal silica (Aerosil) or bentonite type clay may be used. In an embodiment, for example, the filler may be selected from the group consisting of glass fiber, carbon fiber, titanium oxide, alumina, talc, mica, aluminum hydroxide, or combinations thereof, but it is not especially limited thereto. The amount of filler in the composition may be 0.01 to 80 parts by weight, or 0.01 to 50 parts by weight, or 0.1 to 20 parts by weight, based on total 100 parts by weight of the epoxy resin and the curing agent for the epoxy resin.

The resin modifier may be, for example, flexibility-imparting agent, etc. such as polypropylene glycidyl ether, polymerized fatty acid polyglycidyl ether, polypropylene glycol, urethane prepolymer, etc., but it is not especially limited thereto. The amount of resin modifier in the composition may be 0.01 to 80 parts by weight, or 0.01 to 50 parts by weight, or 0.1 to 20 parts by weight, based on total 100 parts by weight of the epoxy resin and the curing agent for the epoxy resin.

The silane coupling agent may be, for example, chloropropyltrimethoxysilane, vinyltrichlorosilane, γ-methacryloxypropyltrimethoxysilane, γ-aminopropyltriethoxysilane, etc., but it is not especially limited thereto. The amount of silane coupling agent in the composition may be 0.01 to 20 parts by weight, or 0.05 to 10 parts by weight, or 0.1 to 5 parts by weight, based on total 100 parts by weight of the epoxy resin and the curing agent for the epoxy resin.

The diluent is added to the epoxy resin or the curing agent for the epoxy resin and used for the main purpose of lowering the viscosity, and when used, it improves flowability, deaeration, penetration into part detail, etc. and takes a role of effectively adding the filler. Differently from solvent, diluent is generally not volatile and remains in the cured product when curing the resin, and it is divided into reactive diluent and non-reactive diluent. Reactive diluent has one or more epoxy groups and participates in the reaction to be incorporated into the cured product as crosslinked structure, whereas the non-reactive diluent is just physically mixed and dispersed in the cured product. There are several kinds of reactive diluent used generally and largely such as butyl glycidyl ether (BGE), phenyl glycidyl ether (PGE), aliphatic glycidyl ether (C12-C14), modified-tert-carboxylic glycidyl ester, etc. Non-reactive diluent used generally is dibutyl phthalate (DBP), dioctyl phthalate (DOP), nonyl phenol, Hysol, etc. In an embodiment, for example, the diluent may be selected from the group consisting of n-butyl glycidyl ether, phenyl glycidyl ether, glycidyl methacrylate, vinylcyclohexene dioxide, diglycidyl aniline, glycerin triglycidyl ether, or combinations thereof, but it is not especially limited thereto. The amount of diluent in the composition may be 0.01 to 80 parts by weight, or 0.01 to 50 parts by weight, or 0.1 to 20 parts by weight, based on total 100 parts by weight of the epoxy resin and the curing agent for the epoxy resin.

As colorant for providing the resin with color, pigment or dye is used. As pigment used generally, colorant such as titanium dioxide, cadmium red, shining green, carbon black, chrome green, chrome yellow, navy blue, shining blue, etc. is used.

Other than the above, it is possible to use various additives such as defoamer and deaeration agent used for the purpose of removing air bubbles from the resin, dispersant for increasing the dispersion effect between resin and pigment, wetting agent for better adhesion of epoxy resin to the material, viscosity controlling agent, gloss controlling agent for controlling the gloss of resin, additive for improving adhesion, additive for imparting electrical property, etc.

The method of curing the epoxy resin composition of the present invention is not especially limited, and for example, conventionally known curing device such as closed-type curing furnace or tunnel furnace capable of continuous curing, etc. may be used. Heating method used in respective curing is not especially limited, and for example, conventionally known method such as hot air convection, infrared heating, high frequency heating, etc. may be used.

The curing temperature and curing time may be at 80°C to 250°C for 30 seconds to 10 hours, respectively. In an embodiment, the first curing may be conducted at 80°C to 120°C for 0.5 hour to 5 hours, and then the second curing may be conducted at 120°C to 180°C for 0.1 hour to 5 hours. In an embodiment, for short time curing, the curing may be conducted at 150°C to 250°C for 30 seconds to 30 minutes.

In an embodiment, the epoxy resin composition of the present invention may be stored in a state divided into

two or more components, for example, a component containing the curing agent and the other component containing the epoxy resin, and they can be combined before the curing. In other embodiment, the epoxy resin composition of the present invention may be stored as a thermosetting composition formulated to comprise the components, and provided to the curing as it is. In case of being stored as a thermosetting composition, it may be stored at a low temperature (usually -40°C to 15°C).

Thus, another aspect of the present invention provides a cured product obtained by curing the epoxy resin composition of the present invention.

Also, still another aspect of the present invention provides a molded article comprising the cured product of the present invention.

The present invention is explained in more detail through the following Examples and Comparative Examples. However, the scope of the present invention is not limited thereby in any manner.

## EXAMPLES

### <Preparation of anhydrodugar alcohol composition>

Preparation Example A1: Preparation of anhydrodugar alcohol composition comprising monoanhydrosugar alcohol, dianhydrosugar alcohol and polymer thereof

In a 3-necked glass reactor equipped with an agitator, 1,000g of sorbitol powder (D-sorbitol) was added and the inside temperature of the reactor was elevated to 110°C for melting, and then 10g of concentrated sulfuric acid (95%) was added thereto and the reaction temperature was elevated to 135°C. Then, the dehydration reaction was conducted for 4 hours under vacuum condition of 30 torr. Thereafter, the inside temperature of the reactor was lowered to 110°C, and 20g of 50% sodium hydroxide solution was added to the dehydration reaction product solution for neutralization, and then the neutralized solution was fed into a thin film distillator (also known as short path distillator (SPD)) for distillation. At that time, the distillation was carried out at 160°C under vacuum condition of 1 mbar, and the distilled liquid was separated. After the separation, obtained was 304g of anhydrodugar alcohol composition comprising 31 % by weight of isosorbide (dianhydrosugar alcohol), 17 % by weight of sorbitan (monoanhydrosugar alcohol) and 52 % by weight of polymer thereof, wherein the number average molecular weight of the composition was 257 g/mol, the poly dispersity index of the composition was 1.78, the hydroxyl value of the composition was 783 mg KOH/g, and the average number of -OH groups per molecule in the composition was 3.6.

### <Preparation of anhydrodugar alcohol-alkylene glycol composition>

Example A1: Preparation of anhydrodugar alcohol-alkylene glycol composition with the addition amount of 50 parts by weight of ethylene oxide to 100 parts by weight of anhydrodugar alcohol composition

In a high pressure reactor equipped with an agitator, 100g of the anhydrodugar alcohol composition obtained in Preparation Example A1 and 0.1g of potassium hydroxide (KOH) were added and the temperature was elevated to 120°C, and then 50g of ethylene oxide was added thereto. The reaction was then conducted at 120°C for 3 hours to obtain 149g of anhydrodugar alcohol-alkylene glycol composition with the addition amount of 50 parts by weight of ethylene oxide to 100 parts by weight of anhydrodugar alcohol composition.

Example A2: Preparation of anhydrodugar alcohol-alkylene glycol composition with the addition amount of 300 parts by weight of ethylene oxide to 100 parts by weight of anhydrodugar alcohol composition

Excepting that the addition amount of ethylene oxide was changed from 50g to 300g, the same method as Example A1 was conducted to obtain 379g of anhydrodugar alcohol-alkylene glycol composition with the addition amount of 300 parts by weight of ethylene oxide to 100 parts by weight of anhydrodugar alcohol composition.

Example A3: Preparation of anhydrodugar alcohol-alkylene glycol composition with the addition amount of 200 parts by weight of propylene oxide to 100 parts by weight of anhydrodugar alcohol composition

Excepting that 200g of propylene oxide was used instead of ethylene oxide, the same method as Example A1 was conducted to obtain 288g of anhydrodugar alcohol-alkylene glycol composition with the addition amount of 200 parts by weight of propylene oxide to 100 parts by weight of anhydrodugar alcohol composition.

Example A4: Preparation of anhydrodugar alcohol-alkylene glycol composition with the addition amount of 400 parts by weight of propylene oxide to 100 parts by weight of anhydrodugar alcohol composition

Excepting that 400g of propylene oxide was used instead of ethylene oxide, the same method as Example A1 was conducted to obtain 471g of anhydrodugar alcohol-alkylene glycol composition with the addition amount of 400 parts by weight of propylene oxide to 100 parts by weight of anhydrodugar alcohol composition.

Comparative Example A1: Preparation of anhydrodugar alcohol-alkylene glycol composition with the addition amount of 30 parts by weight of propylene oxide to 100 parts by weight of anhydrodugar alcohol composition

Excepting that 30g of propylene oxide was used instead of ethylene oxide, the same method as Example A1 was conducted to obtain 130g of anhydrodugar alcohol-alkylene glycol composition with the addition amount of 30 parts by weight of propylene oxide to 100 parts by weight of anhydrodugar alcohol composition.

The reactants and properties of the anhydrodugar alcohol-alkylene glycol compositions obtained in Examples A1 to A4 and Comparative Example A1 were measured by the methods explained below, and the results are shown in the following Table 1.

**<Methods for measuring properties>**

(1) Number average molecular weight (Mn) and poly dispersity index (PDI)

Each of the anhydrodugar alcohol-alkylene glycol compositions prepared in Examples A1 to A4 and Comparative Example A1 in an amount of 1 to 3 parts by weight was dissolved in 100 parts by weight of tetrahydrofuran, and the number average molecular weight (Mn) and poly dispersity index (PDI) were measured by using Gel Permeation Chromatography (GPC) (Agilent). The used column was PLgel 3μm MIXED-E 300x7.5mm (Agilent), the column temperature was 50°C, the used eluent was tetrahydrofuran with a flow rate of 0.5 mL/min, and the used standard was polymethyl methacrylate (Agilent).

(2) Hydroxyl value

According to the hydroxyl value test standard ASTM D-4274D, the hydroxyl values of the anhydrodugar alcohol-alkylene glycol compositions were measured by conducting esterification reaction of each of the anhydrodugar alcohol-alkylene glycol compositions prepared in Examples A1 to A4 and Comparative Example A1 with excessive phthalic anhydride in the presence of imidazole catalyst and then titrating the residual phthalic anhydride with 0.5 N sodium hydroxide (NaOH).

(3) Hydroxyl equivalent weight

The hydroxyl equivalent weight of each of the anhydrodugar alcohol-alkylene glycol compositions prepared in Examples A1 to A4 and Comparative Example A1 was calculated according to the following equation:

$$\text{Hydroxyl equivalent weight (g/eq)} = 56{,}100 / \text{Hydroxyl value}$$

[Table 1]

| | | Example | | | | Comparative Example |
|---|---|---|---|---|---|---|
| | | A1 | A2 | A3 | A4 | A1 |
| Reactants | Anhydrodugar alcohol composition (parts by weight) | Preparation Example A1(100) | | | | Preparation Example A1 (100) |
| | Alkylene oxide (parts by weight) | EO(50) | EO (300) | PO (200) | PO (400) | PO(30) |

(continued)

| | | Example | | | | Comparative Example |
|---|---|---|---|---|---|---|
| | | A1 | A2 | A3 | A4 | A1 |
| Properties | Number average molecular weight (g/mol) | 317 | 912 | 689 | 987 | 279 |
| | Poly dispersity index | 1.89 | 2.35 | 2.15 | 2.58 | 1.76 |
| | Hydroxyl value (mgKOH/g) | 615 | 237 | 401 | 221 | 728 |
| | Hydroxyl equivalent weight (g/eq) | 91.2 | 237 | 140 | 254 | 77.1 |

**<Preparation of epoxy resin composition and cured product thereof>**

Example B1: Use of anhydrodugar alcohol-alkylene glycol composition of Example A1 as the curing agent and DGEBA-based epoxy resin as the epoxy resin

32.8g of the anhydrodugar alcohol-alkylene glycol composition obtained in Example A1 (hydroxyl equivalent weight (HEW): 91.2 g/eq, 1 equivalent amount) and 67.2g of diglycidyl ether of bisphenol A (DGEBA)-based bifunctional epoxy resin (YD-128, Kukdo Chemical, epoxy equivalent weight (EEW): 187 g/eq, 1 equivalent amount) were mixed, and to 100 parts by weight of the mixture, 0.1 part by weight of N,N-dimethylbutylamine (DMBA, Sigma Aldrich) as catalyst was added to prepare an epoxy resin composition.

For a sample of cured epoxy product obtained from the above-prepared epoxy resin composition, elongation ratio was measured and the result is shown in the following Table 2.

In addition, for the above-prepared epoxy resin composition, differential scanning calorie analysis was conducted by using a differential scanning calorimeter (Q20, TA instruments). Concretely, the above-prepared epoxy resin composition was sealed within an aluminum pan and the temperature was elevated from room temperature to 250°C with a temperature elevation rate of 10°C/minute under highly pure nitrogen atmosphere. Thereafter, the differential scanning calorie analysis was conducted until the exothermic peak disappeared. At that time, whether the epoxy resin composition was cured or not was confirmed by the measured enthalpy. The measured enthalpy is shown in the following Table 2.

Example B2: Use of anhydrodugar alcohol-alkylene glycol composition of Example A2 as the curing agent and DGEBA-based epoxy resin as the epoxy resin

55.9g of the anhydrodugar alcohol-alkylene glycol composition obtained in Example A2 (HEW: 237 g/eq, 1 equivalent amount) and 44.1g of diglycidyl ether of bisphenol A-based bifunctional epoxy resin (YD-128, Kukdo Chemical, EEW: 187 g/eq, 1 equivalent amount) were mixed, and to 100 parts by weight of the mixture, 0.1 part by weight of N,N-dimethylbutylamine (DMBA, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

Example B3: Use of anhydrodugar alcohol-alkylene glycol composition of Example A3 as the curing agent and DGEBA-based epoxy resin as the epoxy resin

42.8g of the anhydrodugar alcohol-alkylene glycol composition obtained in Example A3 (HEW: 140 g/eq, 1 equivalent amount) and 57.2g of diglycidyl ether of bisphenol A-based bifunctional epoxy resin (YD-128, Kukdo Chemical, EEW: 187 g/eq, 1 equivalent amount) were mixed, and to 100 parts by weight of the mixture, 0.1 part by weight of N,N-dimethylbutylamine (DMBA, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

Example B4: Use of anhydrodugar alcohol-alkylene glycol composition of Example A3 as the curing agent and cycloaliphatic bifunctional epoxy resin as the epoxy resin

49.3g of the anhydrodugar alcohol-alkylene glycol composition obtained in Example A3 (HEW: 140 g/eq, 1

equivalent amount) and 50.7g of cycloaliphatic bifunctional epoxy resin (Celloxide 2021p, Daicel, EEW: 137 g/eq, 1 equivalent amount) were mixed, and to 100 parts by weight of the mixture, 0.1 part by weight of 2-ethyl-4-methylimidazole (2E4M, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

Example B5: Use of anhydrodugar alcohol-alkylene glycol composition of Example A3 as the curing agent and O-cresol novolac epoxy resin as the epoxy resin

40.5g of the anhydrodugar alcohol-alkylene glycol composition obtained in Example A3 (HEW: 140 g/eq, 1 equivalent amount) and 59.5g of O-cresol novolac epoxy resin (YDCN-500-90P, Kukdo Chemical, EEW: 206 g/eq, 1 equivalent amount) were mixed, and to 100 parts by weight of the mixture, 0.1 part by weight of triphenyl phosphine (TPP, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

Example B6: Use of anhydrodugar alcohol-alkylene glycol composition of Example A4 as the curing agent and DGEBA-based epoxy resin as the epoxy resin

57.6g of the anhydrodugar alcohol-alkylene glycol composition obtained in Example A4 (HEW: 254 g/eq, 1 equivalent amount) and 42.4g of diglycidyl ether of bisphenol A-based bifunctional epoxy resin (YD-128, Kukdo Chemical, EEW: 187 g/eq, 1 equivalent amount) were mixed, and to 100 parts by weight of the mixture, 0.1 part by weight of N,N-dimethylbutylamine (DMBA, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

Comparative Example B1: Use of anhydrodugar alcohol-alkylene glycol composition of Comparative Example A1 as the curing agent and DGEBA-based epoxy resin as the epoxy resin

29.2g of the anhydrodugar alcohol-alkylene glycol composition obtained in Comparative Example A1 (HEW: 77.1 g/eq, 1 equivalent amount) and 70.8g of diglycidyl ether of bisphenol A-based bifunctional epoxy resin (YD-128, Kukdo Chemical, EEW: 187 g/eq, 1 equivalent amount) were mixed, and to 100 parts by weight of the mixture, 0.1 part by weight of N,N-dimethylbutylamine (DMBA, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

Comparative Example B2: Use of phenol-based curing agent as the curing agent and DGEBA-based epoxy resin as the epoxy resin

47.5g of phenol-based curing agent (XLC-4L, Mitsui Chemicals, HEW: 169 g/eq, 1 equivalent amount) and 52.5g of diglycidyl ether of bisphenol A-based bifunctional epoxy resin (YD-128, Kukdo Chemical, EEW: 187 g/eq, 1 equivalent amount) were mixed, and to 100 parts by weight of the mixture, 0.1 part by weight of N,N-dimethylbutylamine (DMBA, Sigma Aldrich) as catalyst was added to prepare an epoxy resin composition. For the above-prepared epoxy resin composition, the elongation ratio of the cured product was measured and the differential scanning calorie analysis was conducted in the same manner as Example B1, and the results are shown in the following Table 2.

**<Methods for measuring properties>**

(1) Elongation ratio

A mold with 200mm × 200mm size was prepared on a glass plate by using silicone rubber, and each of the epoxy resin compositions of Examples B1 to B6 and Comparative Examples B1 to B2 was put therein and kept at room temperature for stabilization. Thereafter, curing was conducted firstly at 100°C for 2 hours, secondly at 140°C for 1 hour, and thirdly at 200°C for 3 hours, and the resulting product was cooled to room temperature, and taken out of the mold to prepare a sample of cured epoxy product in plate shape. For the prepared sample of cured epoxy product, the elongation ratio was measured with a rate of 10 mm/min according to ASTM D2370 standard by using a universal testing machine (INSTRON 5967).

(2) Exothermic amount (ΔH)

By using a differential scanning calorimeter, after fixing the temperature to 150°C, the exothermic amount was measured from the time when the exothermic peak began to appear to the time when the exothermic peak disappeared.

[Table 2]

| | | Epoxy resin | Curing agent | Curing catalyst | Exothermic amount (ΔH) | Elongation ratio (%) |
|---|---|---|---|---|---|---|
| Example | B1 | YD-128 | Example A1 | DMBA | 351.4 | 9.7 |
| | B2 | YD-128 | Example A2 | | 307.8 | 14.1 |
| | B3 | YD-128 | Example A3 | | 293.6 | 10.8 |
| | B4 | Celloxide 2021p | Example A3 | 2E4MI | 297.5 | 14.5 |
| | B5 | YDCN-500-90p | Example A3 | TPP | 314.1 | 8.7 |
| | B6 | YD-128 | Example A4 | DMBA | 298.4 | 13.9 |
| Comparative Example | B1 | YD-128 | Comparative Example A1 | DMBA | 373.1 | 3.8 |
| | B2 | | XLC-4L | | 332.1 | 2.2 |

As shown in the above Table 2, the samples of Examples B1 to B6 using an anhydrodugar alcohol-alkylene glycol composition according to the present invention as a curing agent showed good elongation ratio of 8% or higher, and good exothermic amount of 290 or higher resulting in good curing degree.

However, the sample of Comparative Example B1 prepared by using an anhydrodugar alcohol-alkylene glycol composition, wherein the addition amount of alkylene oxide was less than the specific range of the present invention and the number average molecular weight, poly dispersity index, hydroxyl value and hydroxyl equivalent weight were out of the specific ranges of the present invention, as a curing agent showed high exothermic amount resulting in good curing degree, but very poor elongation ratio of 4% or lower. Also, the sample of Comparative Example B2 prepared by using a commercially available phenol-based curing agent for general purpose showed high exothermic amount resulting in good curing degree, but very poor elongation ratio of 4% or lower.

**<Urethane-modified polyol composition prepared by urethane crosslinking with diisocyanate>**

Example C1: Preparation of urethane-modified polyol composition by using the addition amount of 50 parts by weight of ethylene oxide to 100 parts by weight of anhydrodugar alcohol composition and urethane crosslinking with MDI to make the equivalent ratio of NCO/OH become 1.0

In a 3-necked glass reactor equipped with an agitator, 50g of the anhydrodugar alcohol-alkylene glycol composition obtained in Example A1 and 68.7g of 4,4'-methylenediphenyl diisocyanate (MDI) (Lupranat® MI, BASF) were added, and the inside temperature of the reactor was elevated to 60°C, and then the crosslinking reaction was conducted for 1 hour with agitation. After completing the reaction, the reaction product was cooled to room temperature to obtain 118g of polyol composition urethane-crosslinked with MDI to make the equivalent ratio of NCO/OH become 1.0.

Example C2: Preparation of urethane-modified polyol composition by using the addition amount of 300 parts by weight of ethylene oxide to 100 parts by weight of anhydrodugar alcohol composition and urethane crosslinking with MDI to make the equivalent ratio of NCO/OH become 0.2

Excepting that 50g of the anhydrodugar alcohol-alkylene glycol composition obtained in Example A2 was used instead of the anhydrodugar alcohol-alkylene glycol composition obtained in Example A1 and the amount of MDI was changes from 68.7g to 5.3g, the same method as Example C1 was conducted to obtain 55g of polyol composition urethane-crosslinked with MDI to make the equivalent ratio of NCO/OH become 0.2.

Example C3: Preparation of urethane-modified polyol composition by using the addition amount of 200 parts by weight of propylene oxide to 100 parts by weight of anhydrodugar alcohol composition and urethane crosslinking with HDI to make the equivalent ratio of NCO/OH become 1.5

Excepting that 50g of the anhydrodugar alcohol-alkylene glycol composition obtained in Example A3 was used instead of the anhydrodugar alcohol-alkylene glycol composition obtained in Example A1 and 45.1g of hexamethylene diisocyanate (HDI, Aldrich) was used instead of MDI, the same method as Example C1 was conducted to obtain 94g of polyol composition urethane-crosslinked with HDI to make the equivalent ratio of NCO/OH become 1.5.

Example C4: Preparation of urethane-modified polyol composition by using the addition amount of 200 parts by weight of propylene oxide to 100 parts by weight of anhydrodugar alcohol composition and urethane crosslinking with IPDI to make the equivalent ratio of NCO/OH become 1.0

Excepting that 50g of the anhydrodugar alcohol-alkylene glycol composition obtained in Example A3 was used instead of the anhydrodugar alcohol-alkylene glycol composition obtained in Example A1 and 39.7g of isophorone diisocyanate (IPDI, Aldrich) was used instead of MDI, the same method as Example C1 was conducted to obtain 89g of polyol composition urethane-crosslinked with IPDI to make the equivalent ratio of NCO/OH become 1.0.

Example C5: Preparation of urethane-modified polyol composition by using the addition amount of 400 parts by weight of propylene oxide to 100 parts by weight of anhydrodugar alcohol composition and urethane crosslinking with IPDI to make the equivalent ratio of NCO/OH become 1.0

Excepting that 50g of the anhydrodugar alcohol-alkylene glycol composition obtained in Example A4 was used instead of the anhydrodugar alcohol-alkylene glycol composition obtained in Example A1 and 21.9g of isophorone diisocyanate (IPDI, Aldrich) was used instead of MDI, the same method as Example C1 was conducted to obtain 71g of polyol composition urethane-crosslinked with IPDI to make the equivalent ratio of NCO/OH become 1.0.

Comparative Example C1: Preparation of urethane-modified polyol composition by using the addition amount of 200 parts by weight of propylene oxide to 100 parts by weight of anhydrodugar alcohol composition and urethane crosslinking with MDI to make the equivalent ratio of NCO/OH become 0.1

Excepting that 50g of the anhydrodugar alcohol-alkylene glycol composition obtained in Example A3 was used instead of the anhydrodugar alcohol-alkylene glycol composition obtained in Example A1 and the amount of MDI was changes from 68.7g to 4.5g, the same method as Example C1 was conducted to obtain 54g of polyol composition urethane-crosslinked with MDI to make the equivalent ratio of NCO/OH become 0.1.

Comparative Example C2: Preparation of urethane-modified polyol composition by using the addition amount of 200 parts by weight of propylene oxide to 100 parts by weight of anhydrodugar alcohol composition and urethane crosslinking with MDI to make the equivalent ratio of NCO/OH become 1.7

Excepting that 50g of the anhydrodugar alcohol-alkylene glycol composition obtained in Example A3 was used instead of the anhydrodugar alcohol-alkylene glycol composition obtained in Example A1 and the amount of MDI was changes from 68.7g to 76.2g, the same method as Example C1 was conducted to obtain 126g of polyol composition urethane-crosslinked with MDI to make the equivalent ratio of NCO/OH become 1.7.

Comparative Example C3: Failure to prepare urethane-crosslinked polyol composition

Excepting that 50g of the anhydrodugar alcohol-alkylene glycol composition obtained in Comparative Example A1 was used instead of the anhydrodugar alcohol-alkylene glycol composition obtained in Example A1 and the amount of MDI was changes from 68.7g to 81.3g, the same method as Example C1 was conducted. However, due to the poor compatibility between the anhydrodugar alcohol-alkylene glycol composition and MDI, the mixing was not facilitated, and accordingly it was not possible to prepare urethane-crosslinked polyol composition.

The reactants and properties of the urethane-modified polyol compositions obtained in Examples C1 to C5 and Comparative Examples C1 to C3 are shown in the following Table 3.

[Table 3]

| | | Example | | | | | Comparative Example | | |
|---|---|---|---|---|---|---|---|---|---|
| | | C1 | C2 | C3 | C4 | C5 | C1 | C2 | C3 |
| Reactants | Anhydrodugar alcohol composition | Exam. A1 | Exam. A2 | Exam. A3 | Exam. A3 | Exam. A4 | Exam. A3 | Exam. A3 | Comp. Exam. A1 |
| | Polyisocyanate | MDI | MDI | HDI | IPDI | IPDI | MDI | MDI | MDI |
| Properties | Equivalent ratio of NCO/OH | 1.0 | 0.2 | 1.5 | 1.0 | 1.0 | 0.1 | 1.7 | 1.0 |

**<Preparation of epoxy resin composition and cured product thereof>**

Examples D1 to D5 and Comparative Examples D1 to D3: Preparation of epoxy resin composition and cured product thereof

Diglycidyl ether of bisphenol A (DGEBA)-based epoxy resin (YD-128, Kukdo Chemical) was used as an epoxy resin, a curing agent for epoxy resin (dicyandiamide (DICY), Aldrich) and a curing promotor for epoxy resin (urea derivative (Diuron), Aldrich) stable at room temperature were used to derive curing reaction at high temperature, calcium carbonate having particle size of 21 to 33 μm ($CaCO_3$, OMYACARB 30-CN, OMYA) was used as a filler, and each of the urethane-modified polyol compositions obtained in Examples C1 to C5 and Comparative Examples C1 to C2 was used as a toughening agent for epoxy resin.

The epoxy resin, curing agent, curing promotor, filler and toughening agent were mixed with the compositional ratio shown in the following Table 4 to prepare epoxy resin compositions of Examples D1 to D5 and Comparative Examples D1 to D3.

Concretely, in a 300mL reaction bath having separated upper and lower parts, under vacuum, the liquid type raw materials (epoxy resin and toughening agent) were added and subjected to the first agitation at 90°C for 20 minutes. Then, the solid type raw materials (curing agent, curing promotor and filler) were added thereto according to the determined compositional ratio, and subjected to the second agitation under the same condition for 30 minutes to prepare an epoxy resin composition.

A casting mold preheated to 120°C was fully filled with the above-obtained epoxy resin composition and moved into a curing oven heated to 170°C, and the curing reaction was conducted for 30 minutes. For the cured product, the following property was measured and the results are shown in the following Table 4.

**<Methods for measuring properties>**

Impact strength

According to ASTM D 256, for a sample of cured product obtained by curing each of the epoxy resin compositions obtained in Examples D1 to D5 and Comparative Examples D1 to D3, impact strength was measured. Concretely, a sample of cured product obtained in each of Examples D1 to D5 and Comparative Examples D1 to D3 was processed to have a size of 63.5mm × 12.7mm × 3mm (length × width × thickness), and by using Izod type impact test machine (CEAST 9350, INSTRON), impact was applied to the sample of cured product by directly hitting it with pendulum, and based on the value obtained through the hitting, the impact strength was measured. At that time, notch of 2.54 mm was applied.

[Table 4]

| | | Example | | | | | Comparative Example | | |
|---|---|---|---|---|---|---|---|---|---|
| | | D1 | D2 | D3 | D4 | D5 | D1 | D2 | D3 |
| Composition | Amount of epoxy resin (parts by weight) | 100 | 100 | 100 | 100 | 100 | 100 | 100 | 100 |
| | Amount of curing agent (parts by weight) | 11 | 11 | 11 | 11 | 11 | 11 | 11 | 11 |
| | Amount of curing promotor (parts by weight) | 1 | 1 | 1 | 1 | 1 | 1 | 1 | 1 |
| | Amount of filler (parts by weight) | 10 | 10 | 10 | 10 | 10 | 10 | 10 | 10 |
| | Amount of toughening agent (parts by weight) | 27 | 27 | 27 | 27 | 27 | 0 | 27 | 27 |
| | Kind of toughening agent | Exam. C1 | Exam. C2 | Exam. C3 | Exam. C4 | Exam. C5 | - | Comp. Exam. C1 | Comp. Exam. C2 |
| Property | impact strength (MPa) | 18.6 | 16.9 | 20.1 | 22.8 | 21.9 | 10.0 | 11.3 | Heat generation at initial stage |

As shown in Table 4 above, the samples of cured product of Examples D1 to D5 according to the present invention were confirmed to exhibit good impact strength property.

However, the sample of Comparative Example D1 using no toughening agent and the sample of Comparative Example D2 using a urethane-modified polyol composition urethane-crosslinked to make the equivalent ratio of NCO/OH become 0.1 or less as a toughening agent exhibited poor impact strength.

In addition, in case of the sample of Comparative Example D3 using a urethane-modified polyol composition urethane-crosslinked to make the equivalent ratio of NCO/OH become 1.7 or more as a toughening agent, when the raw materials were mixed to prepare the epoxy resin composition, a large amount of heat was generated at initial stage, and thus it was not possible to obtain a sample of cured product suitable for property measurement.

## Claims

**1.** An anhydrodugar alcohol-alkylene glycol composition comprising:

(i) monoanhydrosugar alcohol-alkylene glycol;
(ii) dianhydrosugar alcohol-alkylene glycol; and
(iii) alkylene oxide adduct of polymer of one or more of monoanhydrosugar alcohol and dianhydrosugar alcohol,

wherein (1) the number average molecular weight (Mn) of the composition is 280 to 1,000 g/mol; (2) the poly dispersity index (PDI) of the composition is 1.77 to 5.0; and (3) the hydroxyl value of the composition is 200 to 727 mgKOH/g.

**2.** The anhydrodugar alcohol-alkylene glycol composition of Claim 1, wherein the hydroxyl equivalent weight of the composition is 78 to 280 g/eq.

**3.** The anhydrodugar alcohol-alkylene glycol composition of Claim 1, which is that prepared from addition reaction of alkylene oxide and an anhydrodugar alcohol composition comprising i) monoanhydrosugar alcohol, ii) dianhydrosugar alcohol, and iii) polymer of one or more of monoanhydrosugar alcohol and dianhydrosugar alcohol.

**4.** The anhydrodugar alcohol-alkylene glycol composition of Claim 3, wherein the anhydrodugar alcohol composition has (i) the number average molecular weight (Mn) of 160 to 445; (ii) the poly dispersity index (PDI) of 1.25 to 3.15; and (iii) the hydroxyl value of 645 to 900 mgKOH/g.

**5.** The anhydrodugar alcohol-alkylene glycol composition of Claim 3, wherein the polymer of one or more of monoanhydrosugar alcohol and dianhydrosugar alcohol is one or more selected from the group consisting of polymers represented by the following formulas 1 to 5:

[Formula 1]

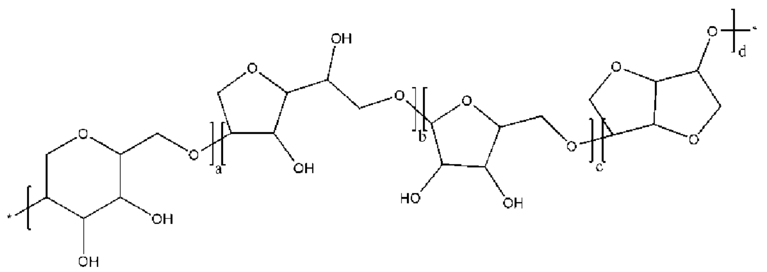

[Formula 2]

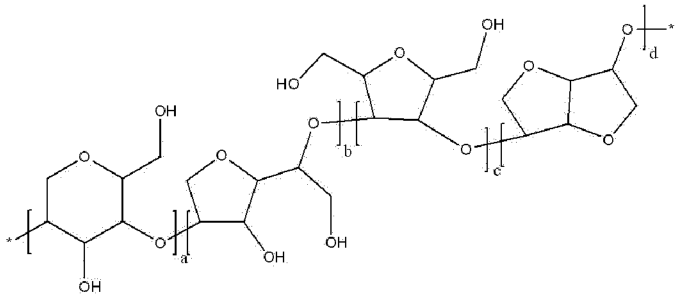

[Formula 3]

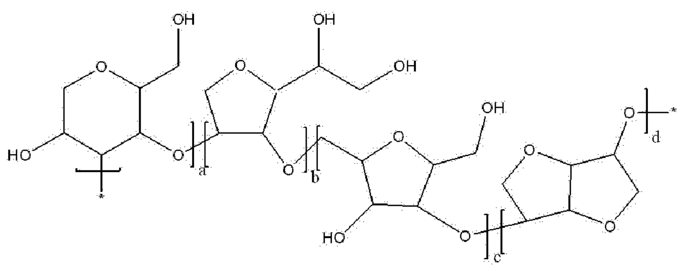

[Formula 4]

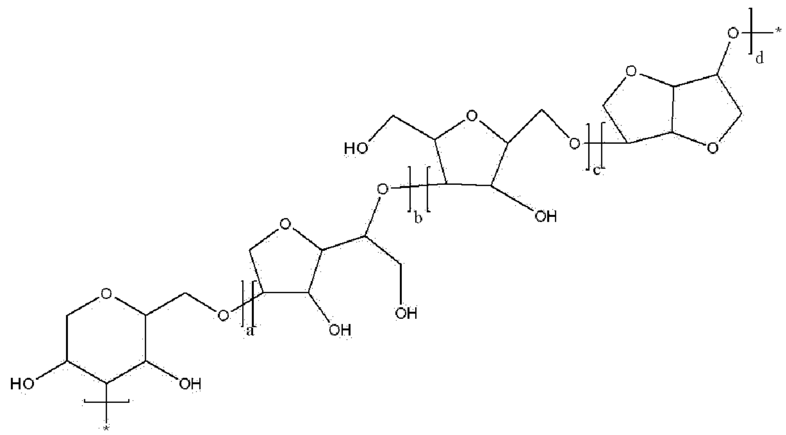

[Formula 5]

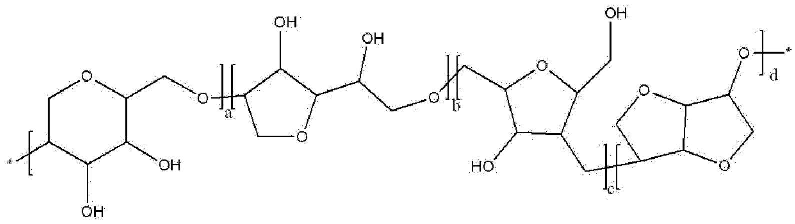

wherein: in formulas 1 to 5,
each of a to d is independently an integer of 0 to 25, provided that a+b+c+d is 2 to 100.

6. The anhydrodugar alcohol-alkylene glycol composition of Claim 3, wherein the alkylene oxide is a linear alkylene oxide having 2 to 8 carbons or a branched alkylene oxide having 3 to 8 carbons.

7. The anhydrodugar alcohol-alkylene glycol composition of Claim 3, wherein 32 parts by weight or more of the alkylene oxide is added to 100 parts by weight of the anhydrodugar alcohol composition.

8. A method for preparing an anhydrodugar alcohol-alkylene glycol composition, comprising a step of addition reaction of an anhydrodugar alcohol composition and alkylene oxide,

wherein the anhydrodugar alcohol composition comprises i) monoanhydrosugar alcohol; ii) dianhydrosugar alcohol; and iii) polymer of one or more of monoanhydrosugar alcohol and dianhydrosugar alcohol; and
wherein (1) the number average molecular weight (Mn) of the prepared anhydrodugar alcohol-alkylene glycol composition is 280 to 1,000 g/mol; (2) the poly dispersity index (PDI) of the prepared anhydrodugar alcohol-alkylene glycol composition is 1.77 to 5.0; and (3) the hydroxyl value of the prepared anhydrodugar alcohol-alkylene glycol composition is 200 to 727 mgKOH/g.

9. A curing agent for epoxy resin comprising the anhydrodugar alcohol-alkylene glycol composition of any one of Claims 1 to 7.

10. A urethane-modified polyol composition prepared by urethane crosslinking reaction of the anhydrodugar alcohol-alkylene glycol composition of any one of Claims 1 to 7 and polyisocyanate, wherein the equivalent ratio of NCO group/OH group is greater than 0.1 and less than 1.7.

11. A method for preparing a urethane-modified polyol composition, comprising a step of urethane crosslinking reaction of the anhydrodugar alcohol-alkylene glycol composition of any one of Claims 1 to 7 and polyisocyanate to prepare the urethane-modified polyol composition,
wherein the anhydrodugar alcohol-alkylene glycol composition and the polyisocyanate are subjected to urethane crosslinking reaction so that the equivalent ratio of NCO group/OH group becomes greater than 0.1 and less than 1.7.

**12.** A toughening agent for epoxy resin comprising the urethane-modified polyol composition of Claim 10.

**13.** An epoxy resin composition comprising: the curing agent for epoxy resin of Claim 9, or the toughening agent for epoxy resin of Claim 12, or combination thereof; and an epoxy resin.

**14.** The epoxy resin composition of Claim 13, wherein the epoxy resin is selected from the group consisting of bisphenol A-epichlorohydrin resin, diglycidyl ether resin of bisphenol A, novolac type epoxy resin, alicyclic epoxy resin, aliphatic epoxy resin, bicyclic epoxy resin, glycidyl ester type epoxy resin, brominated epoxy resin , bio-derived epoxy resin, epoxidized soybean oil, or combinations thereof.

**15.** The epoxy resin composition of Claim 13, wherein the equivalent ratio of the curing agent to the epoxy resin (equivalent amount of the curing agent/equivalent amount of the epoxy resin) is 0.95 to 1.05.

**16.** The epoxy resin composition of Claim 13, further comprising a curing catalyst.

**17.** The epoxy resin composition of Claim 13, further comprising an additive selected from the group consisting of antioxidant, UV absorber, filler, resin modifier, silane coupling agent, diluent, colorant, defoamer, deaeration agent, dispersant, viscosity controlling agent, gloss controlling agent, wetting agent, conductivity imparting agent, or combinations thereof.

**18.** A cured product obtained by curing the epoxy resin composition of Claim 13.

**19.** A molded article comprising the cured product of Claim 18.

**INTERNATIONAL SEARCH REPORT**

International application No.
**PCT/KR2020/008999**

**A. CLASSIFICATION OF SUBJECT MATTER**

**C08G 59/62**(2006.01)i; **C08G 18/10**(2006.01)i; **C08G 18/32**(2006.01)i; **C08L 63/00**(2006.01)i

According to International Patent Classification (IPC) or to both national classification and IPC

**B. FIELDS SEARCHED**

Minimum documentation searched (classification system followed by classification symbols)

C08G 59/62; A61L 27/18; C04B 24/38; C08G 063/02; C08G 063/12; C08G 18/32; C08G 18/42; C08G 18/64; C08G 59/68; C08G 18/10; C08L 63/00

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무수당 알코올(anhydrosugar alcohol), 알킬렌 글리콜(alkylene glycol), 알킬렌 옥사이드(alkylene oxide), 에폭시(epoxy), 경화제(curing agent), 우레탄 변성 폴리올(urethane modified polyol)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0130111 A (SAMYANG CORPORATION) 07 December 2018. See claims 1 and 7; and paragraphs [0026]-[0027] and [0039]. | 1-12 |
| A | US 2003-0212244 A1 (HAYES, R. et al.) 13 November 2003. See claim 1; and paragraphs [0011]-[0015]. | 1-12 |
| A | KR 10-2019-0054913 A (SAMYANG CORPORATION) 22 May 2019. See entire document. | 1-12 |
| A | KR 10-2019-0076963 A (PTT GLOBAL CHEMICAL PUBLIC COMPANY LIMITED) 02 July 2019. See entire document. | 1-12 |
| A | KR 10-2006-0046369 A (ROQUETTE FRERES) 17 May 2006. See entire document. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 October 2020** | **15 October 2020** |

| Name and mailing address of the ISA/KR | Authorized officer |
|---|---|
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2020/008999**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **14-19**
because they relate to parts of the international application that do not comply with the prescribed requirements to such an extent that no meaningful international search can be carried out, specifically:

Claims 14-19 refer to multiple dependent claims not meeting the requirement of PCT Rule 6.4(a).

3. ☑ Claims Nos.: **13**
because they are dependent claims and are not drafted in accordance with the second and third sentences of Rule 6.4(a).

Form PCT/ISA/210 (continuation of first sheet) (July 2019)

**INTERNATIONAL SEARCH REPORT**
**Information on patent family members**

International application No.
**PCT/KR2020/008999**

| Patent document cited in search report | Publication date (day/month/year) | Patent family member(s) | Publication date (day/month/year) |
|---|---|---|---|
| KR 10-2018-0130111 A | 07 December 2018 | KR 10-2018-0127273 A | 28 November 2018 |
| US 2003-0212244 A1 | 13 November 2003 | US 6608167 B1 | 19 August 2003 |
| KR 10-2019-0054913 A | 22 May 2019 | KR 10-2139171 B1 | 30 July 2020 |
| KR 10-2019-0076963 A | 02 July 2019 | CN 109983047 A | 05 July 2019 |
| | | EP 3515957 A1 | 31 July 2019 |
| | | JP 2019-529657 A | 17 October 2019 |
| | | PH 12019500641 A1 | 24 July 2019 |
| | | US 2019-0309121 A1 | 10 October 2019 |
| | | WO 2018-058016 A1 | 29 March 2018 |
| KR 10-2006-0046369 A | 17 May 2006 | CA 2508801 A1 | 02 December 2005 |
| | | CN 1704373 A | 07 December 2005 |
| | | EP 1602634 A2 | 07 December 2005 |
| | | EP 1602634 A3 | 05 November 2008 |
| | | FR 2871155 A1 | 09 December 2005 |
| | | FR 2871155 B1 | 27 April 2007 |
| | | JP 2005-343786 A | 15 December 2005 |
| | | MX PA05005854 A | 08 February 2006 |
| | | NO 20052601 L | 05 December 2005 |
| | | US 2006-0054062 A1 | 16 March 2006 |
| | | US 7255731 B2 | 14 August 2007 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020070104621
- KR 1020120046158


### Non-patent literature cited in the description


- *Journal of Adhesion and Interface,* 2015, vol. 16 (3), 101-107